Europäisches Patentamt

European Patent Office

Office européen des brevets

(11) Publication number : **0 509 969 A1**

# (12) EUROPEAN PATENT APPLICATION

(21) Application number : **92830182.9**

(22) Date of filing : **14.04.92**

(51) Int. Cl.⁵ : **G05G 5/12,** G05G 1/04,
B60R 16/00, H01H 9/02

(30) Priority : **17.04.91 IT TO910088**

(43) Date of publication of application :
**21.10.92 Bulletin 92/43**

(84) Designated Contracting States :
**DE ES FR GB SE**

(71) Applicant : **MAGNETI MARELLI S.p.A.**
**Via Griziotti 4**
**I-20145 Milano (IT)**

(72) Inventor : **Molari, Aurelio, c/o Magneti Marelli**
**S.p.A.**
**V.le Aldo Borletti**
**I-20011 Corbetta (Milano) (IT)**

(74) Representative : **Quinterno, Giuseppe et al**
**c/o Jacobacci-Casetta & Perani S.p.A. Via**
**Alfieri, 17**
**I-10121 Torino (IT)**

(54) A lever control for electrical equipment in a motor vehicle.

(57)    The control includes :
— a body (15) carrying electrical switch means (30, 21, 22) which are operable as a result of the movement of a control lever (30) which is movable relative to the body (15),
— a support casing (4) which can be fixed near the steering wheel (1) and defines a seat in which the body (15) is movable, and
— disconnectible retaining means (16, 18) for retaining the body (15) in a position selected from a plurality of possible positions relative to the casing (4), each position corresponding, in use, to a different position of the control lever (30) relative to the steering wheel (1).

FIG. 3

EP 0 509 969 A1

Jouve, 18, rue Saint-Denis, 75001 PARIS

The present invention relates to a lever control for controlling electrical equipment installed in a motor vehicle.

More specifically, the subject of the invention is a control including:

- a body which can be mounted near the steering wheel and carries electrical switch means which are operable, as a result of the movement of a control lever which is movable relative to the body, to control the electrical supply to one or more electrical devices in the vehicle.

Such lever controls, which are also known as steering-column controls, are used in motor vehicles for controlling an ever-increasing number of electrical functions or devices, such as, for example, the direction indicators, the front and rear windscreen-wipers, the headlamps, etc.

With these controls, it is convenient to be able to reach and operate the control lever easily with one hand, without the hand leaving the steering wheel. The control lever should not, therefore, be too far from the steering wheel when the device is mounted.

Moreover, the control lever should not be so close to the steering wheel as to constitute an obstacle or hindrance during steering.

The object of the present invention is to propose a lever control of the aforesaid type in which the distance between the operating lever and the steering wheel can be adjusted according to the driver's requirements.

According to the invention, this object is achieved by a device of the type specified above, characterised in that it also includes:

- a support casing which can be fixed near the steering wheel and defines a seat in which the body is movable, the casing having at least one hole through which the control lever extends so as to be movable within a predetermined area, and

- disconnectible retaining means for retaining the body in a position selected from a plurality of possible positions relative to the casing, each position corresponding, in use, to a different position of the control lever relative to the steering wheel.

According to a further characteristic, the body is mounted in the casing so as to be rotatable about an axis and movable along the axis.

In one embodiment, one end of the body has a ring of radial teeth coaxial with the axis, and the seat in the casing has a ring of teeth of complementary shape facing the teeth on the body. Resilient means urge the ring of teeth on the body into frontal engagement with the ring of teeth in the casing.

The casing also has, for example, a further hole at one end, coaxial with the axis and the body has an end appendage which extends from the casing through the further hole. The appendage can be pressed manually, against the action of the resilient means, so as to disengage the rings of teeth, enabling the body to be repositioned in a different angular position relative to the casing.

Further characteristics and advantages of the invention will become clear from the detailed description which follows with reference to the appended drawings, provided purely by way of non-limiting example, in which:

Figure 1 is a perspective view of part of the passenger compartment of a motor vehicle, showing a lever control according to the invention, mounted near the steering wheel,

Figure 2 is a view from above taken on the arrow II-II of Figure 1,

Figure 3 is a partially exploded, perspective view of one embodiment of the lever control according to the invention, and

Figure 4 is a partially axially sectioned side view of the control shown in Figure 3.

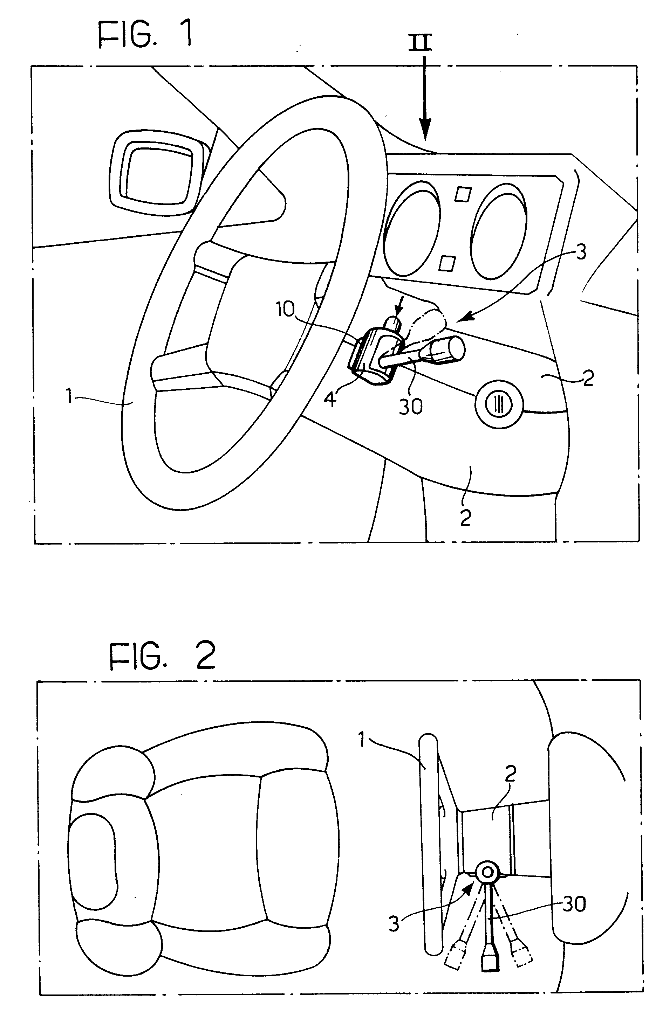

In Figures 1 and 2, the steering wheel of a motor vehicle is indicated 1. A lever control according to the invention, generally indicated 3, is fixed on one side of the steering-column housing 2.

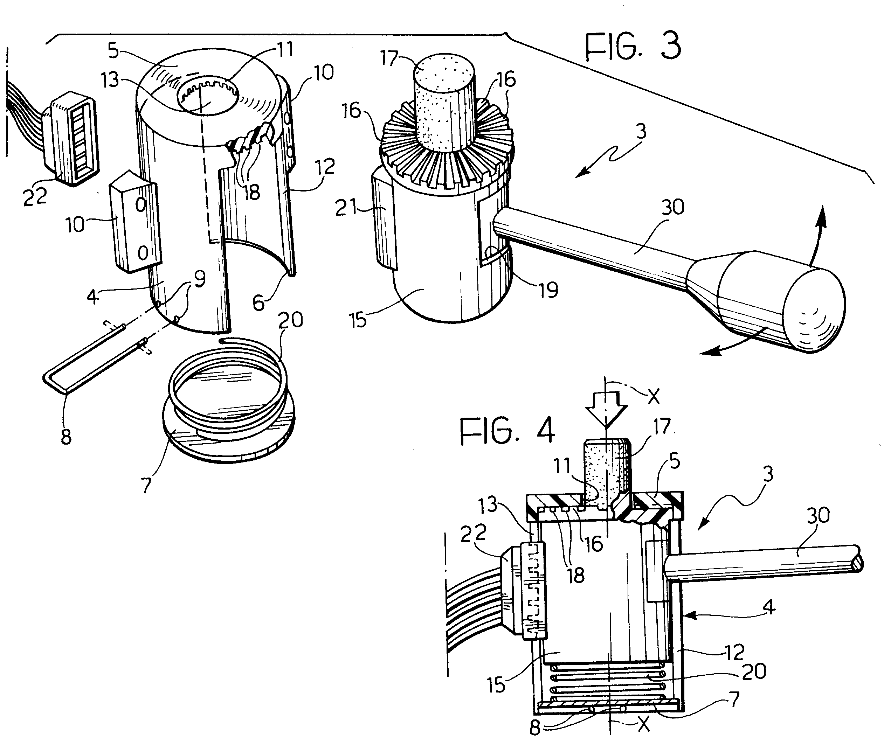

As can best be seen in Figures 3 and 4, the control 3 includes a support casing 4 which, in the embodiment shown by way of example, is substantially cylindrical and hollow. The upper end of the casing has an integral annular wall 5 and its opposite end has an annular shoulder 6 against which a disc-shaped base 7 is disposed and is held in place, for example, by a metal wire hair-pin-like locking element 8, the ends of which are opened out in the mounted condition. The arms or sides of the element extend through corresponding pairs of holes in the side wall of the casing 4 below the shoulder 6. One pair of holes, indicated 9, is visible in Figure 3.

Naturally, other systems may be used for closing the lower end of the casing 4.

In the embodiment shown by way of example, the casing 4 has two external appendages 10 so that it can be fixed to the steering-column housing, for example, by screws or the like. Naturally, various other solutions may also be used for mounting the casing 4 on the steering-column housing 2.

In Figures 3 and 4, the central hole in the annular wall 5 at the end of the casing 4 is indicated 11. The side wall of the casing has two longitudinal holes or slots, indicated 12 and 13.

As shown in Figure 4, a body 15 is movable in the support casing 4. In the embodiment shown by way of example, the body is substantially cylindrical and has a ring of radial teeth 16 on its top. An appendage 17 which, in the embodiment shown by way of example, is cylindrical extends axially from the central region of the ring of teeth.

The internal surface of the annular upper end wall 5 of the casing 4 has a ring of radial teeth 18 complementary to those of the body 15.

The body is shorter than the distance between the base 7 and the annular end wall 5 of the casing 4 in the assembled condition.

As can be seen in Figure 4, in the assembled condition, the body 15 is housed in the casing 4 and its ring of radial teeth 16 meshes with the corresponding ring of radial teeth 18 of the casing. A helical spring 20 urges the body 15 to the position shown in Figure 4 and retains it therein, the appendage 17 extending from the casing 4 through the hole 11 in its end wall 5.

Electrical switches for controlling the electrical supply to one or more electrical devices in the vehicle are housed in the body 15 in known manner. The switches are operable as a result of the movement relative to the body 15 of an associated control lever 30 which extends through a hole 19 in the body.

When the device is assembled, the lever 30 extends through the hole or slot 12 in the casing 4 and, together with the body 15, can perform an angular movement relative to the casing 4, the extent of the movement being determined by the angular extent of the hole 12. The movement takes place about the axis of the body 15, indicated X-X in Figure 4.

In the embodiment shown by way of example, the side of the body 15 opposite the lever 30 has a seat 21 for a terminal box which can be connected to an electrical connector 22 for connection to the electrical device or devices of the vehicle which can be switched on and off by the operation of the lever 30. In the embodiment shown, the connector extends through the hole or slot 13 in the housing 4.

In use, if the user wishes to change the distance between the operating lever 30 in its rest position and the steering wheel 1, he presses the appendage 17 of the body 15 so as to disengage the frontal rings of teeth 16 and 18 and compress the biasing spring 20. In this condition, the operating lever 30 and the associated body 15 can be rotated together relative to the casing 4 and moved to a different angular position relative thereto. When this position has been reached, the appendage 15 is released and the biasing spring 20 re-engages the rings of frontal teeth 16 and 18.

In order to facilitate the meshing of the teeth, each tooth may conveniently be formed with one or more inclined surfaces.

The operations indicated above thus enable the control lever 30 to be positioned in a plurality of possible positions relative to the steering wheel 1, as indicated in Figure 2.

Naturally, the invention extends to all embodiments which achieve equal utility by means of the same innovative concepts.

Thus, the surfaces of the casing 4 and the body 15 which have the frontal teeth may be replaced by other disconnectible retaining means of known type, or even by friction rings.

## Claims

1. A lever control for controlling electrical equipment in a motor vehicle, including:
   - a body (15) which can be mounted near the steering wheel (1) and carries electrical switch means (30, 21, 22) which are operable, as a result of the movement of a control lever (30) which is movable relative to the body (15), to control the electrical supply to one or more electrical devices in the vehicle,
   characterised in that it also includes:
   - a support casing (4) which can be fixed near the steering wheel (1) and defines a seat in which the body (15) is movable, the casing (4) having at least one hole (12) through which the lever (30) extends so as to be movable within a predetermined area, and
   - disconnectible retaining means (16, 18) for retaining the body (15) in a position selected from a plurality of possible positions relative to the casing (4), each position corresponding, in use, to a different position of the control lever (30) relative to the steering wheel (1).

2. A control device according to Claim 1, characterised in that the body (15) is rotatable in the casing (1) about an axis (X) and can move relative to the casing (1) along the axis (X).

3. A control device according to Claim 2, characterised in that one end of the body (15) has a ring of radial teeth (16) coaxial with the axis (X) and the seat in the casing (4) has a complementary ring of teeth (18) facing the ring of teeth (16) on the body (15), and in that resilient means (20) urge the ring of teeth on the body (15) into frontal engagement with the ring of teeth in the casing (4).

4. A control device according to Claim 3, characterised in that one end of the casing (4) has a further hole (11) coaxial with the axis (X), and in that the body (15) has an end appendage (17) which extends from the casing (4) through the further hole (11), and can be pressed manually, against the action of the resilient means (20), so as to disengage the rings of teeth (16, 18), enabling the body (15) and the lever (30) to be repositioned in a different angular position relative to the casing (4).

## FIG. 1

## FIG. 2

FIG. 3

FIG. 4

European Patent Office

# EUROPEAN SEARCH REPORT

Application Number

EP    92 83 0182

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-9 006 245 (AUTO-ELECTRIC) <br> * abstract; figures 1-2 * <br> --- | 1 | G05G5/12 <br> G05G1/04 <br> B60R16/00 <br> H01H9/02 |
| A | FR-A-2 114 300 (EGRETIER) <br> * page 5, line 14 - line 26; figures 1-2,5 * <br> --- | 1,3 | |
| A | US-A-2 108 745 (DODD) <br> * page 1, column 2, line 26 - line 49; figures 1-2 * <br> --- | 1 | |
| A | FR-A-2 458 413 (SA LOUIS HEULIEZ) <br> * page 4, line 8 - page 5, line 32; figures * <br> ----- | 1-3 | |

|  |  |  | TECHNICAL FIELDS SEARCHED (Int. Cl.5 ) |
|---|---|---|---|
|  |  |  | G05G <br> B60R <br> H01H <br> B60K |

The present search report has been drawn up for all claims

| Place of search | Date of completion of the search | Examiner |
|---|---|---|
| THE HAGUE | 15 JULY 1992 | FLODSTROEM J.B. |

EPO FORM 1503 03.82 (P0401)